# EUROPÄISCHE PATENTANMELDUNG

(11) **EP 3 757 698 A1**
(43) Veröffentlichungstag der Anmeldung: **30.12.2020**
(21) Anmeldenummer: 20177142.5
(22) Anmeldetag: 28.05.2020
(51) Int. Cl.: G05B 19/406, G06F 11/36, G05B 17/02, G05B 19/042, G05B 23/00

(54) **VERFAHREN UND VORRICHTUNG ZUR BEWERTUNG UND AUSWAHL VON SIGNAL-VERGLEICHSMETRIKEN**

(30) Priorität: 28.06.2019 DE 102019209536
(71) Anmelder: Robert Bosch GmbH, 70442 Stuttgart (DE)
(72) Erfinder: Heinz, Thomas, 70469 Stuttgart (DE); Sohns, Joachim, 71636 Ludwigsburg (DE); Gladisch, Christoph, 71272 Renningen (DE)

(57) **Zusammenfassung**

Verfahren (20) zum Bewerten eines Simulationsmodelles (22), gekennzeichnet durch folgende Merkmale:
- für ausgewählte Testfälle (21) wird im Simulationsmodell (22) ein erster Leistungsindex (24) berechnet,
- für dieselben Testfälle (21) wird in einer realen Testumgebung (23) ein zweiter Leistungsindex (24) ermittelt,
- für jeden der Testfälle (21) wird eine Differenz (25) zwischen dem ersten Leistungsindex (24) und zweiten Leistungsindex (24) gebildet und eine Signalmetrik (26) bestimmt,
- für jede der Signalmetriken (26) wird eine Wechselbeziehung (27) zwischen der Differenz (25) und der jeweiligen Signalmetrik (26) untersucht und
- diejenige Signalmetrik (26), welche die engste Wechselbeziehung (27) zur Differenz (25) aufweist, wird ausgewählt (28).

## Beschreibung

Die vorliegende Erfindung betrifft ein Verfahren zum Bewerten eines Simulationsmodelles. Die vorliegende Erfindung betrifft darüber hinaus eine entsprechende Vorrichtung, ein entsprechendes Computerprogramm sowie ein entsprechendes Speichermedium.

### Stand der Technik

In der Softwaretechnik wird die Nutzung von Modellen zur Automatisierung von Testaktivitäten und zur Generierung von Testartefakten im Testprozess unter dem Oberbegriff "modellbasiertes Testen" (*model-based testing*, MBT) zusammengefasst. Hinlänglich bekannt ist beispielsweise die Generierung von Testfällen aus Modellen, die das Sollverhalten des zu testenden Systems beschreiben.

Insbesondere eingebettete Systeme (*embedded systems*) sind auf schlüssige Eingangssignale von Sensoren angewiesen und stimulieren wiederum ihre Umwelt durch Ausgangssignale an unterschiedlichste Aktoren. Im Zuge der Verifikation und vorgelagerter Entwicklungsphasen eines solchen Systems wird daher in einer Regelschleife dessen Modell (*model in the loop*, MiL), Software (*software in the loop*, SiL), Prozessor (*processor in the loop*, PiL) oder gesamte Hardware (*hardware in the loop*, HiL) gemeinsam mit einem Modell der Umgebung simuliert. In der Fahrzeugtechnik werden diesem Prinzip entsprechende Simulatoren zur Prüfung elektronischer Steuergeräte je nach Testphase und -objekt mitunter als Komponenten-, Modul- oder Integrationsprüfstände bezeichnet.

DE10303489A1 offenbart ein derartiges Verfahren zum Testen von Software einer Steuereinheit eines Fahrzeugs, bei dem durch ein Testsystem eine von der Steuereinheit steuerbare Regelstrecke wenigstens teilweise simuliert wird, indem Ausgangssignale von der Steuereinheit erzeugt werden und diese Ausgangssignale der Steuereinheit zu ersten Hardware-Bausteinen über eine erste Verbindung übertragen werden und Signale von zweiten Hardware-Bausteinen als Eingangssignale zur Steuereinheit über eine zweite Verbindung übertragen werden, wobei die Ausgangssignale als erste Steuerwerte in der Software bereitgestellt werden und zusätzlich über eine Kommunikationsschnittstelle in Echtzeit bezogen auf die Regelstrecke zum Testsystem übertragen werden.

Derartige Simulationen sind auf verschiedenen Gebieten der Technik verbreitet und finden beispielsweise Einsatz, um eingebettete Systeme in Elektrowerkzeugen, Motorsteuergeräten für Antriebs-, Lenk- und Bremssysteme oder gar autonomen Fahrzeugen in frühen Phasen ihrer Entwicklung auf Tauglichkeit zu prüfen. Dennoch werden die Ergebnisse von Simulationsmodellen nach dem Stand der Technik aufgrund fehlenden Vertrauens in ihre Zuverlässigkeit nur begrenzt in Freigabeentscheidungen einbezogen.

### Offenbarung der Erfindung

Die Erfindung stellt ein Verfahren zum Bewerten eines Simulationsmodelles, eine entsprechende Vorrichtung, ein entsprechendes Computerprogramm sowie ein entsprechendes Speichermedium gemäß den unabhängigen Ansprüchen bereit.

Der erfindungsgemäße Ansatz fußt auf der Erkenntnis, dass die Güte von Simulationsmodellen für die korrekte Vorhersagbarkeit der damit erzielbaren Testergebnisse entscheidend ist. Auf dem Gebiet der MBT beschäftigt sich die Teildisziplin der Validierung mit der Aufgabe, reale Messungen mit Simulationsergebnissen zu vergleichen. Dazu werden verschiedene Metriken, Maßzahlen oder andere Vergleicher verwendet, die Signale miteinander verknüpfen und die im Folgenden zusammenfassend als Signalmetriken (SM) bezeichnet werden sollen. Beispiele für derartige Signalmetriken sind Metriken, die Größe, Phasenverschiebung und Korrelationen vergleichen. Einige Signalmetriken sind durch Normen definiert, z. B. ISO 18571.

Bei der Verifizierung wird typischerweise ein zu testendes System (*system under test*, SUT) anhand einer Anforderung, Spezifikation oder Leistungskennzahl - nachfolgend zusammenfassend: Schlüssel-Leistungsindex (*key performance index*, KPI) - untersucht. Es ist zu beachten, dass boolesche Anforderungen oder Spezifikationen oft in quantitative Messungen umgewandelt werden können, indem man Formalismen wie die Signal-Temporallogik (*signal temporal logic*, STL) verwendet. Ein KPI kann entweder nach einer realen physischen Ausführung oder einer Simulation ausgewertet werden.

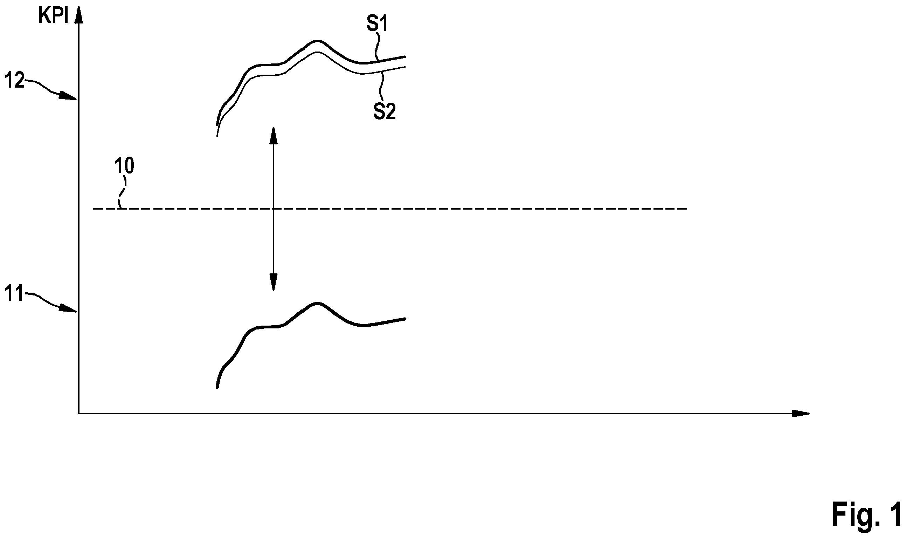

Der Unterschied zwischen KPIs und Signalmetriken ist in Figur 1 dargestellt. Das in einer realen Testumgebung gemessene (S1) und im Wege der Simulation ermittelte Signal (S2) ähneln sich hier. Daher ist die betreffende Signalmetrik gering, aber der Leistungsindex (KPI) beider Signale liegt oberhalb einer vorgegebenen Schwelle (10), welche günstige (11) von ungünstigen (12) Indexwerten trennt. Der Leistungsindex (KPI) ist daher vorliegend als ungünstig (12) zu bewerten. Der mit dem Bezugszeichen 13 bezeichnete absolute Versatz ist hierbei nicht auf eine Fehlaussage der Signalmetrik, sondern des Leistungsindex (KPI) zurückzuführen.

Die weiteren Erläuterungen beruhen auf den im Folgenden dargelegten Begrifflichkeiten.

Eine Signalmetrik stellt ein Maß für die Ähnlichkeit zwischen zwei Signalen dar und vergleicht typischerweise ein Signal aus einem realen Experiment mit einem Signal aus der Simulation. Die Signatur lautet $SM : S \times S \to R ,$ wobei *S* die Grundmenge möglicher Signale bezeichnet.

Ein KPI ist eine Metrik, die in einer für den Menschen verständlichen und rechnerisch auswertbaren Weise definiert, wie gut eine - durch ein Signal dargestellte - Systemleistung ist: $KPI : S \to R .$

Eine Anforderung an ein Signal s basiert auf einem Schwellenwert t für einen KPI (Req(*s*) := KPI(*s*) < *t*), definiert, ob ein durch das Signal verkörpertes Systemverhalten akzeptabel ist, und ermöglicht somit eine binäre Entscheidung: Req: *S* → *B.*

Signalmetriken und KPIs weisen somit unterschiedliche Signaturen auf. Entsprechend verarbeiten Signalmetriken und KPIs unterschiedliche Inhalte. Wie in Figur 1 dargestellt, kann die Signalmetrik zwischen dem realen (S1) und simulierten Ausgangssignal (S2) klein sein, doch beide Signale (S1, S2) können die Systemanforderung verfehlen und daher einen kleinen oder negativen KPI aufweisen.

Das vorgeschlagene Verfahren trägt ferner dem Umstand Rechnung, dass mitunter unklar ist, welche der zahlreichen Signalmetriken bei der Validierung eines Simulationsmodells anhand von Messungen verwendet werden soll. Dies geschieht vor allem dann, wenn die Anforderungen oder Leistungsindikatoren des gesamten Ziel-SUT bei der Validierung noch nicht feststehen. Die beschriebene Methode greift dieses Problem auf und hilft bei der Auswahl der - auf der Grundlage eines bestimmten KPI - jeweils am besten geeigneten Signalmetrik.

Die Unterscheidung zwischen KPI und Anforderung löst das Problem, dass Menschen häufig keinen eindeutigen Schwellenwert angeben können. Die Festlegung eines Schwellenwerts kann es nämlich erfordern, Erfahrungen im Experiment zu sammeln und einen geeigneten Kompromiss zu finden. Die Trennung zwischen KPI und Anforderung ermöglicht es, die Entscheidung über einen akzeptablen Schwellenwert zu verschieben.

Es gibt auch Fälle, in denen eine triviale Beziehung zwischen einem KPI und einer Signalmetrik besteht. Dies ist der Fall, wenn der KPI ein Referenzsignal beinhaltet und anhand einer Signalmetrik definiert ist. In diesem Fall ist eine Anwendung des vorgeschlagenen Verfahrens nur begrenzt sinnvoll, da das Ergebnis belanglos ist.

Ein Vorzug der erfindungsgemäßen Lösung liegt zusammenfassend darin, ein mathematisch motiviertes Kriterium für die Auswahl von Signalmetriken zur Verfügung zu stellen.

Durch die in den abhängigen Ansprüchen aufgeführten Maßnahmen sind vorteilhafte Weiterbildungen und Verbesserungen des im unabhängigen Anspruch angegebenen Grundgedankens möglich.

### Kurze Beschreibung der Zeichnungen

Ausführungsbeispiele der Erfindung sind in den Zeichnungen dargestellt und in der nachfolgenden Beschreibung näher erläutert. Es zeigt:
Figur 1 die Visualisierung der Differenz zwischen einer Signalmetrik und einem KPI.
Figur 2 das Datenflussdiagramm des Verfahrens gemäß, welches repräsentativ ist für unterschiedliche algorithmische Ausführungsformen.
Figuren 3 bis 7 Fälle mit unterschiedlichem Verhältnis zwischen ΔKPI und SM und die resultierende Wechselbeziehung.

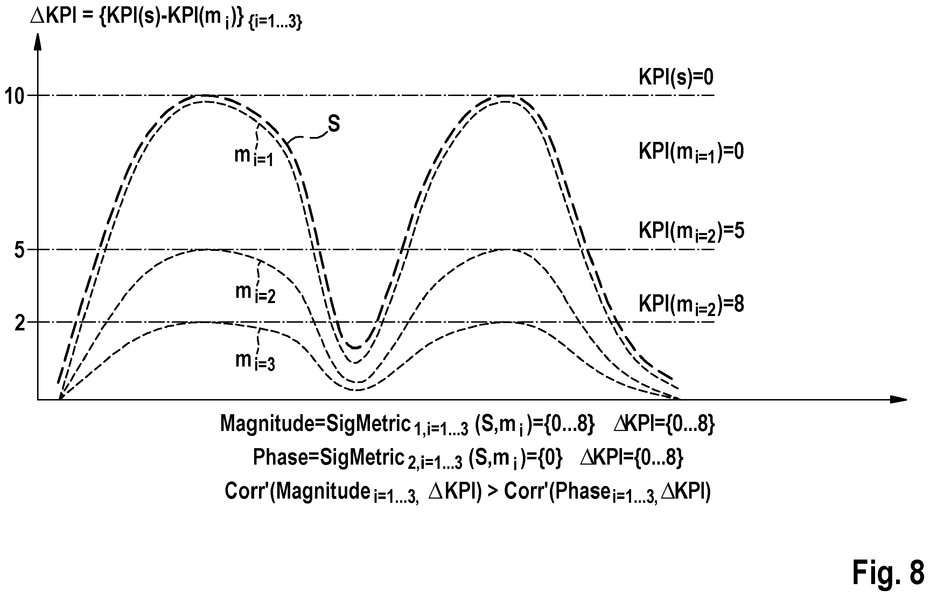

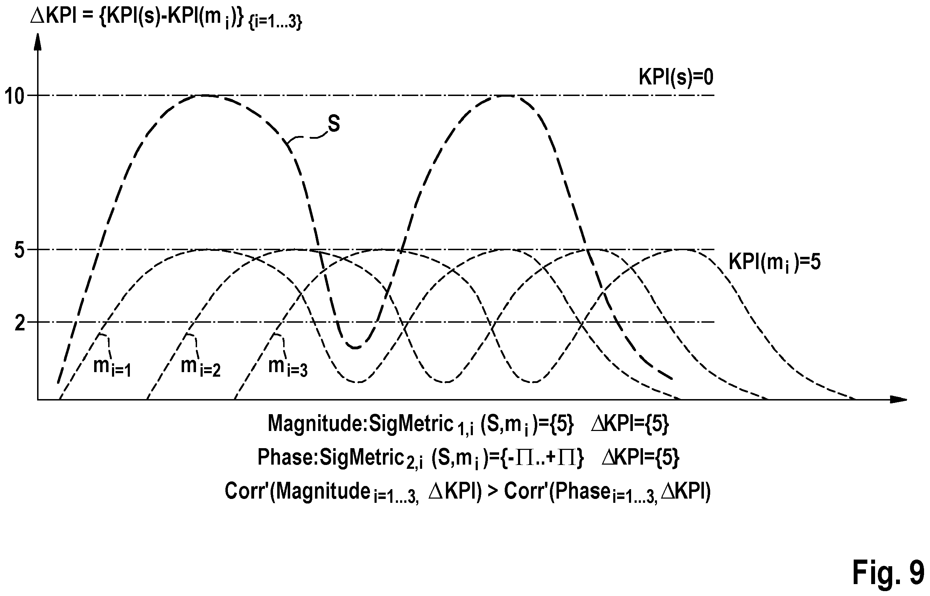

Figur 8 und 9 die beispielhaften Illustrationen der Berechnungen des Verfahrens (Figur 2) gemäß einer möglichen Ausführungsform, bei der das simulierte Signal S festgehalten wird und nur die Messsignale mi variieren.

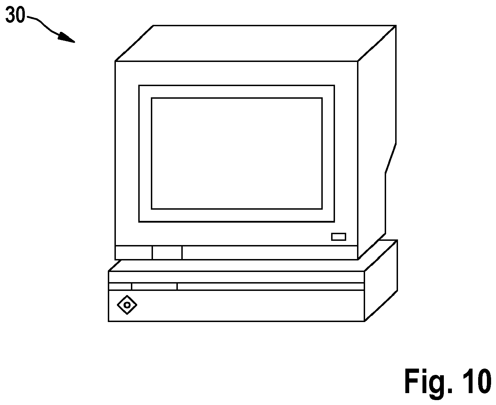

Figur 10 schematisch eine Arbeitsstation gemäß einer zweiten Ausführungsform der Erfindung.

### Ausführungsformen der Erfindung

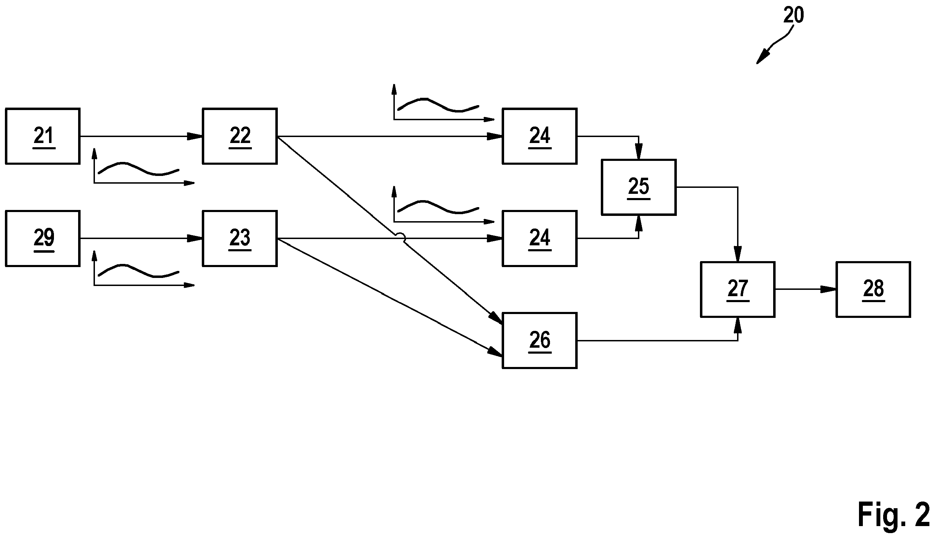

Eine erfindungsgemäße Berechnung wird durch Figur 2 veranschaulicht und verfolgt die Grundidee, für ausgewählte Testfälle (21, 29) durch Variation der Ausgangssignale aus Simulation (22) und Beobachtung (23) verschiedener realer Messungen einerseits variierende Werte ΔKPI und andererseits variierende Signalmetriken (26) zu berechnen. Der erfindungsgemäße Ansatz sieht ferner vor, die Wechselbeziehung (27) zwischen den für ΔKPI errechneten Werten und den Signalmetriken zu berechnen. Diejenige Signalmetrik, die die engste Wechselbeziehung mit ΔKPI aufweist, wird ausgewählt (28). Die Werte ΔKPI bezeichnen hierbei die Differenz (25) des im Simulationsmodell (22) berechneten und des in der realen Testumgebung (23) ermittelten Leistungsindex (24) andererseits.

Eine Variation der Simulationsausgaben wird durch Variation einiger Simulationsparameter, z. B. Eingangsgrößen, erreicht werden. Die Variation der Messungen kann durch Wiederholung von Experimenten oder durch Mehrfachversuche unter unterschiedlichen Bedingungen, etwa mit verschiedenen Parametern, erreicht werden.

Wie bereits erwähnt bildet eine Signalmetrik SM*ₖ* zwei Signale auf einen reellen Wert ab $\left(SM:S\times S\to R\right) ;$ im Gegensatz dazu bildet ein KPI ein Signal - und optional die ursprünglichen SUT-Eingänge *X* - auf einen reellen Wert ab $\left(KPI:S\to R\right) .$ Somit besitzen die Funktionen SM und KPI unterschiedliche Signaturen, daher wird die Wechselbeziehung zwischen ΔKPI $\left(ΔKPI:S\times S\to R\right)$ und SM berechnet.

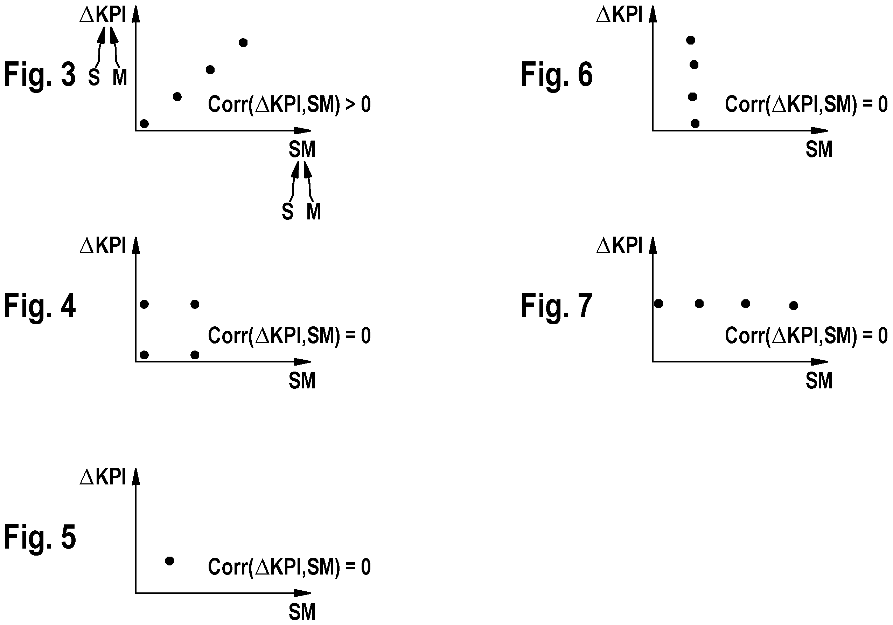

Die gebräuchliche Definition der Korrelation ist jedoch ungeeignet, da es - abweichend vom in Figur 3 dargestellten Idealfall - möglich ist, dass trotz unterschiedlicher Simulationssignale und unterschiedlicher Messungen ΔKPI oder SM konstant ist. In diesem Fall ist die Varianz Var(ΔKPI) bzw. Var(SM) gleich null, sodass ein entsprechender Korrelationskoeffizient undefiniert ist. In Anbetracht derartiger Fälle, wie sie in den Figuren 4 bis 7 dargestellt sind, und numerischer Instabilitäten erweist sich eine modifizierte Korrelation als zielführend: $Corrʹ \left(A, B\right) : = { \begin{matrix}Corr \left(A, B\right) , & Var \left(ΔKPI\right) \neq 0 ∧ Var \left(SM\right) \neq 0 \\ 1 , & Var \left(ΔKPI\right) = Var \left(SM\right) = 0 \\ 0 , & Var \left(ΔKPI\right) = 0 ⊕ Var \left(SM\right) = 0\end{matrix}$ gleichung 1 wobei ⊕ der Exklusiv-Oder Operator ist.

Es sei bemerkt, dass Gleichung 1 auch andere Funktionen verwendet werden können, z. B. die Kovarianz mit den beschriebenen Modifikationen.

Dieses Verfahren (20) kann beispielsweise in Software oder Hardware oder in einer Mischform aus Software und Hardware beispielsweise in einem Steuergerät implementiert sein, wie die schematische Darstellung der Figur 2 verdeutlicht.

## Patentansprüche

1. Verfahren (20) zum Bewerten eines Simulationsmodelles (22) insbesondere eines zumindest teilautonomen Roboters oder Fahrzeuges,
**gekennzeichnet durch** folgende Merkmale:
- für ausgewählte Testfälle (21) wird im Simulationsmodell (22) ein erster Leistungsindex (24) berechnet,
- für dieselben Testfälle (21) wird in einer realen Testumgebung (23) ein zweiter Leistungsindex (24) ermittelt,
- für jeden der Testfälle (21) wird eine Differenz (25) zwischen dem ersten Leistungsindex (24) und zweiten Leistungsindex (24) gebildet und eine Signalmetrik (26) bestimmt,
- für jede der Signalmetriken (26) wird eine Wechselbeziehung (27) zwischen der Differenz (25) und der jeweiligen Signalmetrik (26) untersucht und
- diejenige Signalmetrik (26), welche die engste Wechselbeziehung (27) zur Differenz (25) aufweist, wird ausgewählt (28).

2. Verfahren (20) nach Anspruch 1,
**dadurch gekennzeichnet, dass**
die Signalmetriken (26) mindestens eines der Folgenden betreffen:
- eine Signalstärke,
- eine Phasenverschiebung oder
- eine Korrelation.

3. Verfahren (20) nach Anspruch 1 oder 2,
**dadurch gekennzeichnet, dass**
die Testfälle (21) nach einem der folgenden Verfahren (20) ausgewählt werden:
- einem Zufallsverfahren,
- einer Unsicherheitsquantifizierung oder
- einem suchbasierten Testverfahren.

4. Verfahren (20) nach einem der Ansprüche 1 bis 3,
**gekennzeichnet durch** folgendes Merkmal:
- der erste Leistungsindex (24) wird variiert, indem Parameter des Simulationsmodelles (22) verändert werden.

5. Verfahren (20) nach einem der Ansprüche 1 bis 4,
**gekennzeichnet durch** folgendes Merkmal:
- der zweite Leistungsindex (24) wird variiert, indem die Testfälle (21) wiederholt werden.

6. Verfahren (20) nach einem der Ansprüche 1 bis 5,
**gekennzeichnet durch** folgende Merkmale:
- wenn sowohl die Differenz (25) als auch die Signalmetrik (26) konstant sind, wird die Wechselbeziehung (27) als eins definiert,
- wenn andernfalls die Differenz (25) oder die Signalmetrik (26) konstant ist, wird die Wechselbeziehung (27) als null definiert und
- andernfalls wird die Wechselbeziehung (27) durch ein Zusammenhangsmaß der Differenz (25) und der Signalmetrik (26) definiert.

7. Verfahren (20) nach Anspruch 6,
**gekennzeichnet durch** folgendes Merkmal:
- das Zusammenhangsmaß ist ein Korrelationskoeffizient.

8. Verfahren (20) nach einem der Ansprüche 1 bis 7, **dadurch gekennzeichnet, dass** abhängig von der ausgewählten Signalmetrik (26) eine automatische Verbesserung von anhand der Signalmetrik (26) erkannten Fehlern eines durch das Simulationsmodell (22) modellierten Systems erfolgt.

9. Computerprogramm, welches eingerichtet ist, das Verfahren (20) nach einem der Ansprüche 1 bis 8 auszuführen.

10. Maschinenlesbares Speichermedium, auf dem das Computerprogramm nach Anspruch 9 gespeichert ist.

11. Vorrichtung, die eingerichtet ist, das Verfahren (20) nach einem der Ansprüche 1 bis 8 auszuführen.
